(19) Europäisches Patentamt
European Patent Office
Office européen des brevets

(11) Numéro de publication : **0 657 485 A1**

# (12) DEMANDE DE BREVET EUROPEEN

(21) Numéro de dépôt : **94402757.2**

(22) Date de dépôt : **02.12.94**

(51) Int. Cl.[6] : **C08G 65/14,** C08G 65/22, H01M 6/18, H01M 10/40, C08G 65/12

(30) Priorité : **09.12.93 CA 2111049**

(43) Date de publication de la demande : **14.06.95 Bulletin 95/24**

(84) Etats contractants désignés : **DE FR GB IT**

(71) Demandeur : **HYDRO-QUEBEC**
**75, Boulevard René Levesque Ouest**
**Montréal Québec H2Z 1A4 (CA)**

(72) Inventeur : **Harvey, Paul-Etienne**
**764 Milot,**
**St-Hubert**
**Québec, J3Y 8C2 (CA)**
Inventeur : **Sanchez, Jean-Yves**
**Le Chaboud,**
**781 Chemin de Chartreuse**
**F-38330 Saint-Ismier (FR)**
Inventeur : **Lessard, Ginette**
**1568 Balleray,**
**Longueuil**
**Québec J4M 1V5 (CA)**
Inventeur : **Gauthier, Michel**
**237 St-Ignace,**
**La Prairie**
**Québec J5R 1E6 (CA)**

(74) Mandataire : **Sueur, Yvette et al**
**Cabinet SUEUR & L'HELGOUALCH**
**78, rue Carnot**
**F-95240 Cormeilles-en-Parisis (FR)**

## (54) Copolyéthers réticulables et leur utilisation comme électrolytes polymères.

(57) L'invention concerne un copolymère d'oxyde d'éthylène et/ou d'oxyde de propylène et d'au moins un oxiranne substitué portant une fonction réticulable.

Le copolymère, constitué essentiellement par des unités $-CH_2-CH_2-O-$ et/ou des unités $-CH_2-CH(CH_3)-O-$, et des unités $-CH_2-CHR^1-O-$, est caractérisé en ce que $R^1$ représente un radical $CHR^3=CR^2-X-O-(CH_2)_n-$ dans lequel $R^2$ est $CH_3$ ou H, $R^3$ est H, F, $\Phi$ ou $\Phi-CH=CH$, et X représente un groupement électroattracteur, avec $0 \leqq n \leqq 4$, le substituant $R^1$ pouvant varier d'une unité à l'autre.

Le copolymère est préparé par un procédé de copolymérisation en présence d'un catalyseur de Vandenberg.

Le copolymère est utile pour l'élaboration d'un électrolyte solide possédant de bonnes propriétés mécaniques, une bonne conductivité cationique et une bonne compatibilité chimique avec les électrodes d'un générateur fonctionnant avec des métaux alcalins tels que le lithium et le sodium.

EP 0 657 485 A1

La présente invention concerne un copolymère d'oxyde d'éthylène et/ou d'oxyde de propylène et d'au moins un oxiranne substitué portant une fonction réticulable par voie radicalaire, un procédé pour sa préparation et son utilisation pour l'élaboration d'un électrolyte solide possédant de bonnes propriétés mécaniques, une bonne conductivité cationique et une bonne compatibilité chimique avec les électrodes d'un générateur fonctionnant avec des métaux alcalins tels que le lithium et le sodium.

On connaît les électrolytes polymères obtenus par dissolution d'un sel dans un polymère solvatant comportant des hétéroatomes. De tels électrolytes dont le solvant est un polyoxyde d'éthylène ou un copolymère d'oxyde d'éthylène sont décrits par exemple dans EP-A-013199 (= US-A-4303748). Ces électrolytes polymères ont de nombreuses applications, en particulier dans le domaine des générateurs électrochimiques, des systèmes de modulation de la lumière (EP-A-253713 = US-A-4844591), des capteurs, par exemple pour des membranes sélectives ou de référence (FR-83.09602).

Différentes tentatives pour favoriser la modification ultérieure d'un polymère utilisé pour l'élaboration d'électrolytes polymères ont été faites. On a ainsi introduit des groupements fonctionnels réactifs permettant de greffer sur le polymère de nouvelles fonctions. Ces nouvelles fonctions permettent de modifier le comportement chimique du polymère ou de réticuler le polymère afin d'améliorer ses propriétés mécaniques après sa mise en forme. Par exemple, dans FR-A-2563382 est décrite l'utilisation d'un copolymère pour l'élaboration d'un électrolyte ou d'une électrode, ledit copolymère comportant des motifs oxyde d'éthylène et des motifs oxiranne portant un substituant comportant un groupe alcényle, par exemple un substituant $-O-CH=CH_2$ ou $-CH_2-O-CH_2-CH=CH_2$, le pourcentage molaire du motif oxiranne substitué étant inférieur à 30%. Cependant les insaturations du type vinylique ou allylique sont peu réactives en polymérisation radicalaire et les taux d'insaturations utilisés pour obtenir la réticulation sont souvent compris entre 3 et 5% molaires. De ce fait, la réticulation du copolymère est lente et il subsiste après la réticulation un pourcentage non négligeable de doubles liaisons qui n'ont pas réagi et qui peuvent à long terme évoluer au sein du générateur électrochimique.

La présente invention a pour but de fournir un copolymère d'oxyde d'éthylène et/ou d'oxyde de propylène et d'au moins un oxiranne substitué portant une fonction réactive réticulable par voie radicalaire, qui permet d'obtenir un matériau à conduction ionique qui présente des propriétés mécaniques améliorées par rapport aux matériaux obtenus à partir des copolymères du type poly(oxyalkylène) connus, sans que la conductivité ionique soit diminuée par un nombre trop élevé de points de réticulation qui provoquerait une augmentation de la température de transition vitreuse Tg, ledit matériau à conduction ionique présentant en outre une excellente compatibilité chimique avec les électrodes d'un générateur lorsqu'il est utilisé comme électrolyte.

A cet effet, la présente invention a pour objet un copolymère d'oxyde d'éthylène et/ou d'oxyde de propylène et d'un oxiranne substitué portant une fonction réactive réticulable.

La présente invention a également pour objet un procédé de préparation dudit copolymère.

En outre, la présente invention a pour objet un matériau à conduction ionique comportant ledit copolymère.

Enfin, l'invention a pour objet diverses applications du matériau à conduction ionique

Un copolymère de la présente invention est un copolymère d'oxyde d'éthylène et/ou d'oxyde de propylène et d'un oxiranne substitué

$$\overline{CH_2 - CHR^1 - O}$$

dont la chaîne est constituée essentiellement par des unités $-CH_2-CH_2-O-$ et/ou des unités $-CH_2-CH(CH_3)-O-$, et des unités $-CH_2-CHR^1-O-$, caractérisé en ce que $R^1$ représente un radical $CHR^3=CR^2-X-O-(CH_2)_n-$ dans lequel $R^2$ représente $CH_3$ ou H, $R^3$ représente H, F, Φ ou Φ-CH=CH, et X représente un groupement électroattracteur permettant d'accroître la délocalisation des électrons Π et augmentant la vitesse de polymérisation radicalaire, avec $0 \leqq n \leqq 4$, le substituant $R^1$ pouvant varier d'une unité à l'autre sur une même chaîne macromoléculaire. X peut être choisi parmi des groupes tels que CO, Φ, Φ-CO. Les radicaux $R^1$ dans lesquels n=1 sont particulièrement préférés et parmi ceux-ci, on peut citer : $CH_2=CH-CO-O-CH_2-$, $CH_2=C(CH_3)-CO-O-CH_2-$, $F-CH=CH-CO-\Phi-O-(CH_2)-$, $CH_2=CH-\Phi-O-(CH_2)-$, $CH_2=CH-\Phi-CO-O-(CH_2)-$, $\Phi-CH=CH-CO-O-(CH_2)-$ ou $\Phi-(CH=CH)_2-CO-O-CH_2-$. De préférence, l'oxiranne substitué est choisi parmi le méthacrylate de glycidyle ou l'acrylate de glycidyle.

Lorsque les copolymères de la présente invention sont destinés à être utilisés pour l'élaboration d'un électrolyte polymère, la teneur en unités $-CH_2-CHR^1-O-$ est de préférence inférieure à environ 10% molaire. En effet, les doubles liaisons des radicaux $R^1$, en particulier des groupes du type acrylate ou méthacrylate, réticulent très facilement dans les conditions de polymérisation radicalaire et il est préférable de limiter leur teneur dans le copolymère, lorsque l'on souhaite réduire le nombre de noeuds de réticulation. Lorsque l'électrolyte polymère est peu ou n'est pas gonflé par un solvant, la teneur en unités $-CH_2-CHR^1-O-$ du copolymère est de préférence comprise entre 0,05% et 1% molaire. Lorsque le copolymère est destiné à être utilisé à l'état gonflé par un solvant, la teneur en solvant pouvant être supérieure à 10% en poids, une teneur en unités $-CH_2-CHR^1-$

O- pouvant aller jusqu'à 10% molaire est appropriée. Le carbonate d'éthylène, le carbonate de propylène, le DMSO, l'acétonitrile, le diméthoxyéthane ou leurs mélanges, sont des solvants appropriés.

De préférence, un copolymère de la présente invention comporte en outre, dans sa chaîne, des unités $-CH_2-CHR^4-O-$ dans lesquelles $R^4$ est un radical ne comportant pas de double liaison carbone-carbone, le substituant $R^4$ pouvant varier d'une unité à l'autre dans une même chaîne macromoléculaire. Les unités $-CH_2-CHR^4-O-$ ont pour but de diminuer la cristallinité du copolymère comme les unités portant un substituant $R^1$, tout en limitant le nombre de noeuds de réticulation. Elles permettent en outre d'introduire différentes fonctions, par exemple des groupements ionophores.

Le radical $R^4$ peut être choisi parmi les radicaux alkyles, de préférence parmi les radicaux alkyles ayant de 1 à 16 atomes de carbone, plus préférentiellement parmi les radicaux alkyles ayant de 1 à 8 atomes de carbone. Le radical $R^4$ peut en outre être choisi parmi les radicaux alkoxy tels que par exemple les radicaux $-(CH_2)_n-O-((CH_2)_m-O)_p-CH_3$, avec $0 \leqq n \leqq 4$, $1 \leqq m \leqq 4$ et $0 \leqq p \leqq 20$ ; de préférence n=1, m=2 et $0 \leqq p \leqq 8$.

Le radical $R^4$ peut également être choisi parmi les radicaux alkyl-(perfluoroalkyl sulfonyl) éthers, en particuliers les alkyl-(halogénures de perfluoroalkyl sulfonyl) éthers et les alkyl-(perfluoralkyl sulfonates) éthers. A titre d'exemple, on peut citer les radicaux ayant la formule $-CH_2-O-(CF_2)_q-CF(C_rF_{2r+1})-SO_2X^1$, dans laquelle $X^1$ = F, Cl, Br ou OM, M représentant un proton ou un cation métallique, de préférence un cation de métal monovalent, plus particulièrement un cation de métal alcalin, ou un cation organique tel qu'un cation ammonium, un cation guanidinium ou un cation amidinium, avec $0 \leqq q \leqq 4$, de préférence q=0 ou 1, et $0 \leqq r \leqq 4$, de préférence $0 \leqq r \leqq 3$. Parmi les radicaux préférés, on peut citer les radicaux $-CH_2-O-CF_2-CF_2-SO_2X^1$, $-CH_2-O-CF_2-CF(CF_3)-SO_2X^1$ et $-CH_2-O-CF_2-SO_2X^1$.

Le radical $R^4$ peut aussi être choisi parmi les radicaux incorporant une fonction ionophore dans lesquels la charge négative est portée par le carbanion bis(trifluorométhylsulfonyl)méthylure $-C(SO_2CF_3)_2M$. Parmi ces radicaux, on peut citer $-CH_2-C(SO_2-CF_3)_2M$, $-CH_2-O-CO-\Phi-CO-C(SO_2-CF_3)_2M$, $-(CH_2)_s-CO-C(SO_2-CF_3)_2M$, $-CH_2-O-CO-\Phi-SO_2-C(SO_2-CF_3)_2M$ et $-(CH_2)_s-SO_2-C(SO_2-CF_3)_2M$, avec $1 \leqq s \leqq 16$, de préférence $0 \leqq s \leqq 8$, M représentant un proton ou un cation métallique, de préférence un cation de métal monovalent, plus particulièrement un cation de métal alcalin, ou un cation organique tel qu'un cation ammonium, un cation guanidinium ou un cation amidinium). Les radicaux $-CH_2-C(SO_2-CF_3)_2M$, $-(CH_2)_s-CO-C(SO_2-CF_3)_2M$ et $-(CH_2)_s-SO_2-C(SO_2-CF_3)_2M$ sont particulièrement préférés. La proportion de ces unités oxiranne substitué $-CH_2-CHR^4-O-$ est de préférence comprise entre 0,5 et 10% molaire, plus particulièrement entre 0,5 et 4% molaire si le polymère est utilisé à l'état sec, et entre 0,5 et 6% molaire lorsque le polymère est gonflé par un solvant approprié.

Les copolymères de la présente invention qui ont une masse moléculaire moyenne en nombre très élevée, supérieure à 20 000, de préférence supérieure à 100 000, peuvent être réticulés à l'aide des fonctions réticulables présentes dans les substituants $R^1$. Ces fonctions réticulables étant très actives du fait de la présence d'un groupement électro-attracteur dans le substituant $R^1$, il suffit d'un très faible taux de fonctions réticulables sur le copolymère. Ces caractéristiques permettent d'obtenir un gain appréciable en ce qui concerne les propriétés mécaniques, et notamment la résistance à la pénétration, tout en évitant de diminuer la conductivité ionique par un nombre trop élevé de fonction réticulables qui provoquerait une augmentation de la température de transition vitreuses Tg. En outre, la combinaison d'une masse moléculaire moyenne élevée et d'une fonction facilement réticulable mais en faible concentration (par exemple inférieure à 1% molaire) améliore la compatibilité d'un électrolyte comprenant un copolymère de la présente invention avec les électrodes d'un générateur. En effet, l'invention permet de limiter la concentration et la mobilité des groupes chimiquement réactifs aux électrodes, tels que les fonctions terminales des chaînes macromoléculaires, les amorceurs de synthèse, les fonctions réticulables sensibles aux métaux alcalins ou les polymères ayant des masses molaires faibles susceptibles de diffuser aux électrodes.

Les propriétés mécaniques d'un copolymère de la présente invention peuvent être améliorées par réticulation. Pour des questions d'optimisation des propriétés mécaniques, électriques et chimiques des copolymères d'un générateur électrochimique de la présente invention, on préférera des copolymères de masse moléculaire moyenne en nombre $M_n$ supérieure à 20 000, plus préférentiellement supérieure à 100 000. La réticulation radicalaire de ces copolymères peut être réalisée rapidement par voie photochimique ou thermique, éventuellement en présence d'un amorceur chimique, avec un maximum de gain de propriétés mécaniques (résistance mécanique au fluage et taux d'étirement élevés) et peu de perte en conductivité ionique malgré un très faible taux de fonctions réticulables.

Les copolymères de la présente invention sont préparés par un procédé dans lequel on effectue une copolymérisation d'oxyde d'éthylène et/ou d'oxyde de propylène, d'au moins un oxiranne répondant à la formule

$$\overbrace{CH_2 - CHR^1 - O}$$

et éventuellement d'au moins un oxiranne répondant à la formule

$$\overline{CH_2 - CHR^4 - O},$$

$R^1$ et $R^4$ ayant la signification donnée précédemment, ledit procédé étant caractérisé en ce que la copolymérisation est effectuée à une température inférieure ou égale à 60°C en présence d'un catalyseur de Vandenberg.

Parmi les oxirannes

$$\overline{CH_2 - CHR^1 - O}$$

utilisables pour la préparation des copolymères selon la présente invention, on peut citer l'acrylate de glycidyle et le méthacrylate de glycidyle. L'acrylate de glycidyle et le méthacrylate de glycidyle sont des produits de commerce.

D' autres oxirannes

$$\overline{CH_2 - CHR^1 - O},$$

dans lesquels le substituant $R_1$ comporte un groupe phénate, par exemple $CH_2=CH-\Phi-O-(CH_2)-$ ou $F-CH=CH-CO-\Phi-O-(CH_2)-$, peuvent être préparés par réaction de substitution nucléophile d'un phénate sur le tosylate de glycidol, suivant le schéma réactionnel :

$$CH_2=CH-\Phi-O^-K^+ + GOTs \rightarrow CH_2=CH-\Phi-O-G + TsO^-K^+$$

ou

$$F-CH=CH-CO-\Phi-O^-K^+ + GOTs \rightarrow F-CH=CH-CO-\Phi-O-G + TsO^-K^+$$

G représentant un glycidyle et TsO un groupe tosylate qui est un très bon nucléofuge.

Pour la préparation d'autres oxirannes

$$\overline{CH_2 - CHR^1 - O}$$

dans lesquels le substituant $R_1$ comporte un groupe carboxylate, par exemple $CH_2=CH-\Phi-CO-O-(CH_2)-$ ou $\Phi-CH=CH-CO-O-(CH_2)-$, il est préférable de procéder à l'estérification de la fonction alcool du glycidol par les chlorures des acides carboxyliques correspondants, en présence de pyridine, suivant le schéma réactionnel :

$$CH_2=CH-\Phi-COCl + GOH \rightarrow CH_2=CH-\Phi-CO-O-G + HCl$$

Parmi les oxirannes

$$\overline{CH_2 - CHR^4 - O}$$

on peut citer le méthylglycidyléther et le méthyl oxiranne qui sont des produits de commerce.

Un autre oxiranne, dans lequel le groupement $R^4$ est du type $-CH_2-O-CF_2-CF_2-SO_2F$ peut être obtenu par action de l'épibromhydrine avec le produit d'addition de AgF sur la tétrafluoroéthanesultone isomérisée dans le diglyme. AgBr formé est éliminé et l'oxiranne recherché est obtenu par distillation. De la même manière, l'oxiranne dans lequel $R^4$ est $-CH_2-O-CF_2-CF(CF_3)-SO_2F$ est obtenu à partir de la sultone cyclique correspondante.

Un oxiranne dans lequel $R^4$ est $-CH_2-C(SO_2CF_3)_2^-M^+$ peut être obtenu par action de l'épibromhydrine sur le bis(trifluorométhylsulfonyl)méthylure d'argent dans la pyridine. Le sel de pyridinium formé est traité par un sel du cation M, ce qui libère la pyridine et permet d'obtenir l'oxiranne portant le substituant $R^4$ recherché. Le sel de M peut être par exemple un phosphate ou un carbonate. Un oxiranne de ce type est un produit hygroscopique à conserver en boîte à gant sous argon.

La polymérisation de Vandenberg est une polymérisation de coordination adaptée aux polymérisations par ouverture du cycle d'un hétérocycle. Elle consiste à faire réagir les monomères en présence d'un catalyseur comprenant un amorceur et un coamorceur. L'amorceur est choisi parmi les composés organométalliques tels que les composés du type trialkyl aluminium, en particulier le triéthyl aluminium ou le tributyl aluminium, les composés du type dialkyl zinc ou diaryl zinc, en particulier le diéthyl zinc ou le diphényl zinc. Le coamorceur est généralement l'eau, et le milieu peut contenir en outre l'éther diéthylique comme diluant. De préférence, le rapport molaire de l'amorceur au coamorceur est environ 2. Il est avantageux d'introduire en outre dans le milieu réactif un agent chélatant tel que par exemple l'acétylacétone. La température est de préférence maintenue entre 50°C et 60°C, par exemple pendant une durée d'environ 24 heures, de manière à éviter toute réaction radicalaire par voie thermique des doubles liaisons.

Le procédé de polymérisation du type Vandenberg permet d'obtenir des copolymères ayant une masse molaire moyenne en poids supérieure à 20 000.

Cependant, les chaînes formées n'ont pas toutes la même composition. Les chaînes formées à la fin de la polymérisation ont une masse moins élevée et contiennent une proportion plus élevée d'unités $-CH_2-CHR^1-O-$ et $-CH_2-CHR^4-O-$ que d'unités dérivées de l'oxyde d'éthylène, que les chaînes formées vers le début de la réaction. Ceci constitue un avantage en ce que les chaînes les plus courtes, qui ont besoin d'un plus haut degré de réticulation, sont également celles qui contiennent le plus de fonctions réticulables $-CH_2-CHR^1-O-$. De plus, les fonctions réticulables $-CH_2-CHR^1-O-$ sont très réactives et réagiront préférentiellement en se réticulant en laissant peu de fonctions qui pourraient réagir dans une étape ultérieure avec, par exemple, des éléments réactifs d'un dispositif électrochimique, lorsque les copolymères sont utilisés pour l'élaboration d'un matériau à conduction ionique.

Les copolymères de la présente invention sont particulièrement utiles pour l'élaboration de matériaux à conduction ionique.

Pour l'élaboration d'un matériau à conduction ionique de la présente invention, on peut utiliser parmi les copolymères de la présente invention, ceux qui comportent, outre les unités dérivées de l'oxyde d'éthylène et les unités $-CH_2-CHR^1-O-$, des unités $-CH_2-CHR^4-O-$, notamment ceux qui comportent d'environ 2% à environ 30% molaire d'unités $-CH_2-CHR^4-O-$. La présence de ces unités $-CH_2-CHR^4-O-$, de même que celle des unités $-CH_2-CHR^1-O-$, a pour effet de diminuer la cristallinité du copolymère inhérente aux unités oxyde d'éthylène, et donc d'améliorer la conductivité du matériau. Toutefois, le remplacement d'une partie des unités $-CH_2-CHR^1-O-$ par des unités $-CH_2-CHR^4-O-$ permet de limiter le nombre de doubles liaisons carbone-carbone qui constituent des noeuds de réticulation. Cette optimisation est d'autant plus facile à réaliser que des copolymères ayant une masse moléculaire supérieure à 20 000 en nombre seront préférentiellement utilisés pour effectuer la réticulation.

Suivant un mode de mise en oeuvre, un matériau à conduction ionique de la présente invention comprend essentiellement un composé ionique facilement dissociable en solution dans un copolymère selon la présente invention. Le composé ionique introduit dans le copolymère avant réticulation ou dans le polymère réticulé est choisi parmi les composés ioniques utilisés habituellement pour les matériaux du type polymère solide à conduction ionique. A titre d'exemple, on peut citer les composés ioniques $(1/aA)^+Y^-$ dans lesquels $A^{a+}$ représente un proton, un cation métallique, un cation organique du type ammonium, amidinium ou guanidinium, a étant la valence du cation $A^{a+}$; $Y^-$ représente un anion à charge électronique délocalisée, par exemple $Br^-$, $ClO_4^-$, $AsF_6^-$, $R_FSO_3^-$, $(R_FSO_2)_2N^-$, $(R_FSO_2)_3C^-$, $C_6H_{(6-x)}-(CO(CF_3SO_2)_2C^-)_x$ ou $C_6H_{(6-x)}-(SO_2(CF_3SO_2)_2C^-)_x$, $R_F$ représentant un groupement perfluoroalkyle ou perfluoroaryle, avec $1 \leqq x \leqq 4$. Les composés ioniques préférés sont les sels de lithium, et plus particulièrement $(CF_3SO_2)_2N^-Li^+$, $CF_3SO_3^-Li^+$, les composés $C_6H_{(6-x)}-[CO(CF_3SO_2)_2C^-Li^+]_x$ dans lesquels x est compris entre 1 et 4, de préférence avec x = 1 ou 2, les composés $C_6H_{(6-x)}-[SO_2(CF_3SO_2)_2C^-Li^+]_x$ dans lesquels x est compris entre 1 et 4, de préférence avec x = 1 ou 2. Des mélanges de ces sels entre eux ou avec d'autres sels peuvent être utilisés. A titre d'exemple de mélanges de sels on peut citer : $(CF_3SO_2)_2N^-Li^+$ et $CF_3SO_3^-Li^+$ ou $(CF_3SO_2)_2N^-Li^+$ et $C_6H_4-[CO(CF_3SO_2)_2C^-Li^+]_2$ dans des proportions variées, mais comprenant de préférence de 20 à 40% en poids de $(CF_3SO_2)_2N^-Li^+$. Le composé ionique peut être incorporé au copolymère en immergeant le copolymère, éventuellement sous forme d'un film, dans une solution du composé ionique choisi dans un solvant ; le solvant est ensuite éliminé et la quantité de composé ionique incorporé est déterminée par l'augmentation du poids du polymère après incorporation du composé ionique. Dans une variante, le composé ionique peut être incorporé au polymère en préparant un film à partir d'une solution contenant le copolymère et le composé ionique.

Suivant un autre mode de réalisation, un matériau à conduction ionique de la présente invention est constitué essentiellement par un copolymère selon la présente invention dans lequel un composé ionique comportant une insaturation a été greffé sur les radicaux $R^1$ par coréticulation avec les unités $-CH_2-CHR^1-O-$. Dans ce cas, il est préférable d'utiliser un copolymère selon la présente invention comprenant d'environ 2% à environ 10% molaire d'unités $-CH_2-CHR^1-O-$. Parmi les composés ioniques appropriés qui peuvent être greffés sur les radicaux $R^1$, on peut citer les dérivés de sultones perhalogénées portant un groupement ionique décrits dans WO93/16988, par exemple les composés du type $CH_2=CH-CH_2-(CF_2)_2-SO_3M'$, $CH_2=CH-CH_2-O-CF(C_yF_{2y+1})-CF_2SO_3M'$ et $CH_2=CH-CF(C_yF_{2y+1})-CF_2SO_3M'$, avec $0 \leqq y \leqq 4$, de préférence $1 \leqq y \leqq 3$, M' représentant un proton , un cation métallique, plus particulièrement un cation de métal monovalent, un cation organique. Parmi les cations métalliques, les cations de métal alcalin sont particulièrement préférés. Parmi les cations organiques, on peut citer les cations ammonium, les cations guanidinium et les cations amidinium, lesdits cations organiques étant éventuellement quaternarisés. On peut citer en particulier les sels de bis(trifluorométhylsulfonyl)méthylure tels que $[CH_2=C(CH_3)-CO-C(SO_2-CF_3)_2]^-Li^+$, $[CH_2=C(CH_3)-C(SO_2-CF_3)_2]Li^+$, $[CH_2=CH-CH_2-CO-C(SO_2-CF_3)_2]^-Li^+$, $[CH_2=CH-CH_2-SO_2-C(SO_2-CF_3)_2]^-Li^+$, $[CH_2=CH-SO_2-C(SO_2-CF_3)_2]^-Li^+$, $[CH_2=CH-\Phi-SO_2-C(SO_2-CF_3)_2]^-Li^+$, $[CH_2=CH-\Phi-CO-C(SO_2-CF_3)_2]^-Li^+$.

Selon encore un autre mode de réalisation, un matériau à conduction ionique peut être constitué essentiellement par un copolymère comportant des unités $-CH_2-CHR^4-O-$ dans lesquelles le radical $R^4$ comporte des

groupes bis(trifluorométhylsulfonyl)méthylure $-C(SO_2CF_3)_2M$ ou des groupes perfluorosulfonyles du type $-CH_2-O-(CF_2)_q-CF(C_rF_{2r+1})-SO_2X^1$, $X^1$ représentant OH ou OM et M représentant un métal monovalent ou un groupe organique du type ammonium, amidinium ou guanidinium. Les unités $-CH_2-CHR^4-O-$ remplissent alors deux fonctions. D'une part, elles diminuent la régularité de la chaîne macromoléculaire solvatante, et par conséquent la cristallinité ; d'autre part, elles confèrent au copolymère un caractère conducteur ionique unipolaire cationique. Un résultat analogue peut être obtenu lorsque dans les groupements $-CH_2-O-(CF_2)_q-CF(C_rF_{2r+1})-SO_2X^1$, $X^1$ représente un halogène ; il suffit dans ce cas de traiter le copolymère obtenu par une base du type MOH, $M_2CO_3$, $M_3PO_4$ ou trialkyl silanolate de M, dans laquelle M représente le cation que l'on souhaite associer à l'anion perfluorosulfonate.

Les différents moyens décrits ci-dessus pour introduire des espèces ioniques dans un copolymère selon l'invention pour l'élaboration d'un matériau à conduction ionique peuvent bien entendu être combinés si on le souhaite.

Du fait de la grande réactivité des substituants $R^1$ en général, et des substituants acrylate ou méthacrylate de glycidyle en particulier, lors d'une réaction de réticulation radicalaire, il est préférable que le copolymère de l'invention utilisé pour l'élaboration d'un matériau à conduction ionique ne contienne pas plus d'environ 1%, de préférence de 0,05% à 1% molaire d'unités $-CH_2-CHR^1-O-$, afin de limiter les points de réticulation lorsque le matériau à conduction ionique est utilisé sans solvant ou plastifiant, ou avec une teneur en solvant ou en plastifiant inférieure à 10% en poids. Un nombre de points de réticulation trop élevé provoquerait une rigidification excessive du polymère obtenu par réticulation, se traduisant par une diminution de la conductivité du copolymère réticulé. Toutefois, si le matériau à conduction ionique est destiné à être utilisé sous forme d'une membrane gonflée par un solvant tel que par exemple le carbonate d'éthylène, le carbonate de propylène, le DMSO, l'acétonitrile, le diméthoxyéthane ou leurs mélanges, par exemple pour constituer un électrolyte, on peut incorporer dans le copolymère, de 5 à 10% molaire d'unités $-CH_2-CHR^1-O-$. En outre, si les unités $-CH_2-CHR^1-O-$ sont destinées à être réticulées avec des sels ioniques comportant une insaturation, le taux molaire de ces unités sera préférentiellement compris entre 3 et 5%.

Lorsque le matériau à conduction ionique est utilisé sous forme de film, il est souhaitable que le copolymère utilisé présente une certaine tenue mécanique afin qu'il puisse être mis sous forme de film et introduit dans un système électrochimique avant d'être réticulé. Il est dans ce cas souhaitable d'utiliser un copolymère selon l'invention ayant une masse molaire moyenne en nombre $M_n$ élevée, de préférence supérieure à 20 000, plus préférentiellement supérieure à 100 000.

Bien entendu, les matériaux à conduction ionique de la présente invention peuvent contenir en outre des additifs utilisés habituellement dans les matériaux à conduction ionique tels que des plastifiants déjà cités, des stabilisants, etc., suivant les propriétés finales recherchées.

Les matériaux à conduction ionique de la présente invention, constitués par un copolymère et un composé ionique ou par un copolymère portant des substituants ioniques, sont utilisables comme électrolyte solide polymère ou comme matériau d'électrode. L'invention a par conséquent également pour objet une cellule électrochimique dans laquelle l'électrolyte séparant les électrodes et/ou au moins l'une des électrodes existant sous forme de composite, comportent un matériau à conduction ionique selon la présente invention. Dans un mode de réalisation particulier, l'électrolyte séparant les électrodes est une membrane constituée par un matériau à conduction ionique selon la présente invention, plastifié par addition d'un solvant approprié, par exemple par un mélange carbonate d'éthylène / carbonate de propylène dans un rapport en poids d'environ 1/1.

Les copolymères et les matériaux à conduction ionique de la présente invention sont utiles pour un générateur électrochimique à métal alcalin rechargeable ou non. Un tel générateur comprend une électrode négative et une électrode positive séparées par un électrolyte solide polymère, l'électrolyte solide polymère comprenant un copolymère selon la présente invention. Dans un tel générateur, les électrodes peuvent également contenir un matériau à conduction ionique de la présente invention agissant en tant que liant conducteur, lorsqu'elles sont réalisées sous forme composite. Dans cette application particulière, les copolymères de la présente invention sont particulièrement intéressants du fait qu'ils contiennent peu d'espèces susceptibles d'interférer avec les réactions électrochimiques. En effet, les masses molaires moyennes élevées obtenues diminuent substantiellement le nombre d'extrémités réactives et les masses molaires moyennes élevées que les copolymères peuvent avoir confèrent aux copolymères et aux matériaux à conduction ionique qui les contiennent une bonne tenue mécanique intrinsèque, qui peut être améliorée par réticulation d'une faible quantité de fonctions réticulables, compte tenu de la grande réactivité des fonctions réticulables présentes.

Les copolymères et les matériaux à conduction ionique sont également utiles dans d'autres systèmes électrochimiques tels que les systèmes électrochromes, les systèmes de modulation de lumière, pour l'élaboration de membranes sélectives ou de membranes de référence dans les capteurs à membrane.

Les exemples suivants sont donnés pour illustrer la présente invention sans en limiter la portée.

Dans les exemples, la polymérisation de coordination a été effectuée dans des réacteurs commerciaux

en acier inoxydable Parr® commercialisés par Parr Instrument Company, ayant des capacités allant de 0,3 à 8 litres et munis d'un agitateur et d'une vanne de pied permettant de les vider par le bas. Toutes les opérations de transfert ont été effectuées sous une atmosphère inerte en utilisant de l'argon ou de l'azote très secs et exempts d'oxygène. On peut également utiliser des réacteurs dont l'intérieur est recouvert de verre.

Dans chacun des exemples, le réacteur utilisé a été séché au préalable de la manière suivante. On a introduit sous vide 200 ml de toluène sec, ensuite le réacteur a été chauffé à 150°C pendant 30 min et le toluène vidé à chaud à travers la vanne de pied. On a ensuite pompé sous vide pendant environ 10 min, puis on a introduit par aspiration 20 ml d'une solution $5.10^{-3}$ mole/l d'amorceur organométallique dans l'heptane. Le réacteur a ensuite été chauffé à 120°C pendant 20 min, puis vidé à chaud et maintenu sous un vide de 25 Pa pendant 10 min.

L'oxyde d'éthylène a été distillé, et les autres monomères ainsi que les solvants ont été séchés préalablement à leur utilisation sur tamis moléculaire de manière à porter leur teneur en eau à une valeur inférieure à 100 ppm, lesdites teneurs étant vérifiées par la méthode de Karl-Fischer.

Ces procédures de purification préalables se sont avérées très importantes à l'obtention de copolymères de hautes masses molaire moyennes, préférentiellement de 20 000 à 100 000 et plus.

**EXEMPLE 1**

On a introduit dans un réacteur 1 775 g de toluène, 101,6 g de méthylglycidyléther, 23,6 g de méthacrylate de glycidyle et 292,3 g d'oxyde d'éthylène. L'amorceur de polymérisation a été formé in situ, avant l'introduction des monomères, en ajoutant lentement, à une température comprise entre - 5°C et -2°C, 6,2 ml d'acétylacétone à 125 ml de triisobutyl aluminium, 100 ml d'éther éthylique et 1,1 g d'eau. La polymérisation a été effectuée pendant 24 heures.

L'analyse par RMN du proton, effectuée sur une solution du copolymère dans $CD_3CN$, a permis de déterminer la teneur en unités oxyde d'éthylène (OE) et en unités méthylglycidyl éther (MGE) du copolymère. La composition du copolymère ainsi déterminée, exprimée en % molaire, est : 93% d'oxyde d'éthylène, 6,5% de méthylglycidyl éther et 0,5% de méthacrylate de glycidyle.

Le copolymère obtenu, auquel on a ajouté 2% en poids de peroxyde de benzoyle, a ensuite été dissous dans l'acétonitrile. La solution visqueuse obtenue a été dégazée et coulée pour obtenir une membrane ayant une épaisseur de 60 μm. L'acétonitrile a ensuite été évaporé sous vide et la réticulation du copolymère a été effectuée en portant la membrane à 70°C pendant 30 min. Ensuite, la membrane gonflée a été lavée au Soxhlet, et l'on a constaté une perte de masse d'environ 8%, correspondant à des chaînes non réticulées. Un lavage à froid suffit à éliminer les chaînes non réticulées. Le taux de solubles déterminé sur le copolymère est nettement inférieur à celui observé habituellement pour des copolymères analogues comportant des doubles liaisons allyliques au lieu des groupements $R^1$.

L'analyse par calorimétrie différentielle DSC du copolymère non réticulé réalisée sur une station STA 409 commercialisée par NETZCH fait apparaître en premier balayage deux pics endothermiques de fusion à 37°C et 49°C, une température de transition vitreuse Tg de -63°C et un taux de cristallinité proche de 30%. Ces résultats font apparaître que la composition du copolymère n'est pas totalement statistique et qu'il comporte de longues séquences de polyoxyde d'éthylène de l'ordre de 3000 à 4000 g/mole. Après une fusion de l'échantillon suivie d'une trempe, le second balayage ne fait apparaître qu'un pic de fusion à 41°C. Après réticulation, la membrane non lavée présente un pic de fusion large, un taux de cristallinité voisin de 20% et un Tg de -59°C.

Des essais de traction réalisés sur une éprouvette ayant une épaisseur de 200 μm montrent un allongement à la rupture de 930%. Par comparaison, un réseau obtenu par polymérisation radicalaire d'un poly(oxyéthylène) ayant une masse de 2000 fonctionnalisé en position $\alpha,\omega$ par des motifs méthacrylates de glycidyle présente un allongement à la rupture qui ne dépasse pas 370%

Des électrolytes polymères ont été préparés en incorporant le sel $(CF_3SO_2)_2N^-Li^+$ dans les membranes lavées telles qu'obtenues ci-dessus. Le sel a été incorporé à la membrane en faisant gonfler la membrane par une solution concentrée du sel dans l'acétonitrile, puis en évaporant le solvant. La quantité de sel incorporé dans la membrane a été déterminée par la différence de poids de la membrane. La concentration en sel est donnée par le rapport O/Li, c'est-à-dire par le rapport de la concentration en unités solvatantes à la concentration en sel. Les mesures ont été effectuées entre 25 et 80°C sur quatre compositions. Les résultats sont indiqués dans le tableau 1 ci-dessous.

Tableau 1

| N° | O/Li | Tg °C | Phase cristalline | Conductivité S/cm |
|---|---|---|---|---|
| 1 | 6 | -38 | non | $10^{-5}$ à 50°C |
| 2 | 11 | -42 | non | $10^{-4}$ à 60°C |
| 3 | 13 | -44 | non | $10^{-5}$ à 28°C |
| 4 | 25 | -54 | non | $10^{-4}$ à 60°C |

L'échantillon le plus conducteur à température ambiante est l'échantillon n°3. Les échantillons n° 2 et 4 sont les plus conducteurs à une température plus élevée.

## EXEMPLE 2

On a préparé un copolymère d'oxyde d'éthylène, de méthylglycidyl éther et de méthacrylate de glycidyle.

Dans un réacteur de 300 ml, on a introduit 8 g d'oxyde d'éthylène, 2 g de méthylglycidyl éther et 0,4 g de méthacrylate de glycidyle, ce qui représente des proportions molaires respectives de 84,5%, 13% et 2,5%.

Le mélange amorceur constitué par 20 ml de toluène, 2,6 ml de tributyl aluminium, 2 ml d'éther et 0,13 ml de pentanedione a été préparé dans une boîte à gants à température ambiante, puis introduit dans le réacteur. Ensuite, on a procédé de la même manière que dans l'exemple 1, la durée de réaction étant toutefois de 48 heures.

Le copolymère obtenu contient 93% en moles d'oxyde d'éthylène, 6,4% en moles de méthylglycidyl éther et 0,6% en moles de méthacrylate de glycidyle.

L'analyse DSC montre la présence d'une phase ayant un taux de cristallinité X = 0,32 fondant à 51°C. La phase amorphe présente un Tg voisin de -60°C

Le copolymère a été réticulé en présence de différentes quantité du sel $[CH_2{=}C(CH_3){-}CO{-}C(SO_2{-}CF_3)_2]^-Li^+$, en présence de peroxyde de benzoyle. La conductivité la plus élevée a été observée pour un rapport O/Li=14 ($10^{-5}$S/cm à 35°C et $10^{-4}$S/cm à 65°C).

## EXEMPLE 3

Un mélange amorceur comprenant 80 ml de toluène, 1,04 ml d'une solution à 1 mole/l de triéthyl aluminium, 0,8 ml d'éther et 0,052 ml de pentanedione a été préparé dans une boîte à gants, puis introduit dans un réacteur de 0,3 l et porté à 50°C. Ensuite, on a introduit dans le réacteur au moyen d'un sas, un mélange constitué par 9,2 g d'oxyde d'éthylène, 1,9 g d'un oxiranne portant un substituant $R^4$ = $-CF_2{-}CF_2{-}SO_2F$ et 0,4 g de méthacrylate de glycidyle, correspondant à des proportions molaires respectives de 94,8%, 3,94% et 1,26%. Le mélange réactionnel a ensuite été porté à 60°C et maintenu à cette température pendant 72 heures. Le copolymère obtenu contenait les trois monomères précédents respectivement dans les proportions molaires suivantes : 95,9%, 2,9% et 1,2%.

Le copolymère obtenu a ensuite été mis en solution dans l'acétonitrile et traité par une quantité stoechiométrique de triméthylsilanolate de lithium $(CH_3)_3{-}Si{-}O^-\ Li^+$, c'est-à-dire 0,61 g. Ce sel réagit quantitativement avec la fonction fluorure du substituant $R^4$ selon la réaction :

$$(CH_3)_3{-}Si{-}O^-Li^+ + {-}CF_2{-}CF_2{-}SO_2F \rightarrow {-}CF_2{-}CF_2{-}SO_3^-Li^+ + (CH_3)_3{-}Si{-}F$$

Le fluoro triméthylsilane bout à 17°C et s'élimine facilement.

Le procédé en deux étapes a permis d'effectuer la réaction dans le toluène dans lequel le sel de lithium obtenu est insoluble. Le copolymère obtenu possède ainsi une fonction sel incorporée à la chaîne macromoléculaire.

Une membrane de grande surface a été réalisée de la même manière que dans l'exemple 1, et découpée en plusieurs échantillons.

## EXEMPLE 4

Des mesures de conductivité ont été effectuées sur des échantillons de la membrane de l'exemple 3 ayant subi des traitements différents.

a) Echantillon tel qu'obtenu dans l'exemple 3.

La conductivité ionique atteint $10^{-6}$ S/cm à température ambiante, $10^{-5}$ S/cm à 60°C et $10^{-4}$ S/cm à 95°C.

L'analyse thermique montre un taux de cristallinité voisin de 40% avec un point de fusion de 42°C.

b) Membrane de l'exemple 3, traitée dans une solution diluée de $(CF_3SO_2)_2N^-Li^+$ dans l'acétonitrile, de manière à fixer un faible quantité dudit sel, correspondant à un rapport O/Li=100.

Un tel traitement conduit à une augmentation importante de la conductivité ($10^{-4}$ S/cm vers 60°C) qui reste essentiellement cationique.

c) Membrane de l'exemple 3, gonflée par addition de 20% en poids d'acétonitrile.

La conductivité atteint $3.10^{-4}$ S/cm à 25°c et $10^{-3}$ S/cm à 55°C.

**EXEMPLE 5**

Le groupe méthacrylate du copolymère de l'exemple 3 comporte une fonction vulnérable en présence d'un métal alcalin tel que le lithium métallique, ce qui pourrait affecter la longévité d'une batterie au lithium. En conséquence, la stabilité électrochimique à 80°C d'un échantillon préparé en incorporant le sel $(CF_3SO_2)_2N^-Li^+$ au copolymère réticulé de l'exemple 3 (rapport O/Li = 14) a été testée en utilisant la voltamétrie cyclique sur micro-électrodes de platine et de nickel. Le voltamogramme réalisé sur micro-électrode de platine montre les alliages et composés intermétalliques formés entre le lithium et le platine et une stabilité en oxydation jusqu'à +4 volts vs $Li/Li^+$.

L'étude sur micro-électrode de nickel montre le dépôt de lithium suivi de sa redissolution lors du balayage retour en oxydation. Dans ces conditions, la faible quantité de fonction ester fournie par le méthacrylate n'a pas perturbé la stabilité électrochimique de l'électrolyte polymère.

**EXEMPLE 6**

On a préparé un copolymère d'oxyde d'éthylène, de méthylglycidyl éther et de méthacrylate de méthyle.

Dans un réacteur de 8 litres, on a introduit 319,2 g d'oxyde d'éthylène, 78,3 g de méthylglycidyl éther, et 2,1 g de méthacrylate de glycidyle, ce qui représente des proportions molaires respectives de 88,9%, 10,9% et 0,2%.

Le mélange amorceur constitué par 2 l de toluène, 54 ml de triéthyl aluminium à 25% (1,9 M) dans le toluène, 100 ml de diéthyl éther, 0,9 g d'eau, et 5,0 g d'acétylacétone a été préparé sous atmosphère inerte à température ambiante, puis introduit dans le réacteur. La polymérisation a été effectuée pendant 20 heures.

On a formé un film de 50 microns d'épaisseur avec le copolymère obtenu et un sel $(CF_3SO_2)_2NLi$ dans un rapport O/Li de 30/1, et du peroxyde de benzoyle dans une proportion de 2% du polymère. On a réticulé le polymère en le chauffant à 80°C pendant 6 heures. La conductivité mesurée est alors de $3.10^{-4}$ S/cm à 60°C. Cette valeur de conductivité est sensiblement équivalente (moins de 10%) à la conductivité, mesurée dans les mêmes conditions avec un copolymère constitué uniquement d'oxyde d'éthylène et de méthylglycidyl éther dans les mêmes proportions, malgré le gain des propriétés mécaniques dans le cas de la réticulation avec le méthacrylate.

Des essais de pénétration sur ce film réticulé ont été effectués à l'aide d'un micromètre modèle 543-180 équipé de pointes hémisphériques modèle 101-119 de la compagnie Mitutoyo. On a constaté qu'il fallait exercer une pression de 20 MPa pour obtenir une pénétration identique à celle qu'on obtient avec une pression de 8 Mpa sur un échantillon comprenant 2% molaire d'allylglycidyl éther réticulé par réaction avec 2% en poids de peroxyde de benzoyle.

Il est également possible de réticuler ce copolymère à la température ambiante en remplaçant le peroxyde de benzoyle par l'Irgacure-651® à raison de 0,1% du poids de polymère ; la réticulation est effectuée par une exposition de 20 secondes à une lampe à rayonnements ultra-violets de longueur d'onde 254 nm, avec une puissance de 40 à 50 microwatt/$cm^2$. La résistance mécanique de cet échantillon, et ses propriétés conductrices ne diffèrent pas sensiblement de ceux obtenus avec les autres méthodes de réticulation.

**EXEMPLE 7**

Le copolymère de l'exemple 1 a été élaboré sous forme d'un film de 30 microns d'épaisseur contenant un sel $(CF_3SO_2)_2NLi$ dans un rapport O/Li de 30/1. Ce film est assemblé dans un générateur comportant une anode de lithium de 22 microns et une cathode composite à base d'oxyde de vanadium d'une capacité de 6 Coulomb par $cm^2$ élaborée sur nickel. La cathode contient également un additif de conduction électronique, du noir de Shawinigan au taux d'environ 5% en poids et un électrolyte polymère constitué de 93% molaire d'oxyde d'éthylène et 7% molaire de méthylglycidyl éther, également chargé en sel $(CF_3SO_2)_2NLi$ dans un rapport O/Li de 30/1. La cellule électrochimique est assemblée par pressage sous vide à 85°C ; sa surface active est de 3,86 $cm^2$. Lorsque cette cellule est cyclée à 60°C, à un taux de décharge de C/8 (décharge en 8 heures) et de

charge en C/12, un nombre de cycles de décharge/charge profondes supérieur à 100 est obtenu sans perte d'utilisation appréciable, i.e. moins de 10% de l'utilisation observée après le conditionnement des 10 premiers cycles. Ce comportement est identique à ce qui est observé avec un électrolyte ne comportant pas de fonctions réticulables considérées compatibles, du type allylglycidyl éther. On confirme donc par cet exemple qu'aux faibles taux utilisés, les fonctions de type méthacrylate de glycidyle, après réticulation, peuvent être compatibles électrochimiquement avec un générateur au lithium lorsque mises en oeuvre dans un électrolyte copolymère réalisé selon la présente invention.

## Revendications

1. Copolymère d'oxyde d'éthylène et/ou d'oxyde de propylène et d'un oxiranne substitué

$$\overline{CH_2 - CHR^1 - O}$$

dont la chaîne est constituée essentiellement par des unités $-CH_2-CH_2-O-$ et/ou des unités $-CH_2-CH(CH_3)-O-$, et des unités $-CH_2-CHR^1-O-$, caractérisé en ce que $R^1$ représente un radical $CHR^3=CR^2-X-O-(CH_2)_n-$ dans lequel $R^2$ est $CH_3$ ou H, $R^3$ est H, F, Φ ou Φ-CH=CH, et X représente un groupement électroattracteur, avec $0 \leqq n \leqq 4$, le substituant $R^1$ pouvant varier d'une unité à l'autre.

2. Copolymère selon la revendication 1, caractérisé en ce qu'il a une masse moléculaire moyenne en nombre supérieure ou égale à 20 000, plus particulièrement supérieure ou égale à 100 000.

3. Copolymère selon la revendication 1, caractérisé en ce que X est choisi parmi CO, Φ et Φ-CO.

4. Copolymère selon la revendication 3, caractérisé en ce que le radical $R^1$ est choisi parmi $\Phi-(CH=CH)_2-CO-O-CH_2-$, $CH_2=C(CH_3)-CO-O-CH_2-$, $CH_2=CH-\Phi-O-(CH_2)-$, $CH_2=CH-\Phi-CO-O-(CH_2)-$, $\Phi-CH=CH-CO-O-(CH_2)-$, $F-CH=CH-CO-\Phi-O-(CH_2)-$ ou $CH_2=CH-CO-O-CH_2-$.

5. Copolymère selon la revendication 1, caractérisé en ce que la teneur en unités $-CH_2-CHR^1-O-$ est comprise entre environ 0,05 et environ 10% molaire.

6. Copolymère selon la revendication 1, caractérisé en ce que la chaîne du copolymère comporte en outre des unités $-CH_2-CHR^4-O-$ dans lesquelles $R^4$ est un radical ne comportant pas de double liaison carbone-carbone, le substituant $R^4$ pouvant varier d'une unité à l'autre.

7. Copolymère selon la revendication 6, caractérisé en ce que le radical $R^4$ est choisi parmi les radicaux alkyles, de préférence parmi les radicaux alkyles ayant de 1 à 16 atomes de carbone ; parmi les radicaux alkoxy, de préférence parmi les radicaux $-(CH_2)_n-O-((CH_2)_m-O)_p-CH_3$, avec $0 \leqq n \leqq 4$, $1 \leqq m \leqq 4$ et $0 \leqq p \leqq 20$ ; parmi les radicaux alkyl-(perfluoroalkyl sulfonyl) éthers, de préférence parmi les radicaux alkyl-(halogénures de perfluoroalkyl sulfonyl) éthers et alkyl-(perfluoralkyl sulfonates) éthers ; parmi les radicaux incorporant une fonction ionophore dans lesquels la charge négative est portée par le carbanion bis(trifluorométhylsulfonyl)méthylure $-C(SO_2CF_3)_2M$, M représentant un proton ou un cation métallique, de préférence un cation de métal monovalent, ou un cation organique tel qu'un cation ammonium, un cation guanidinium ou un cation amidinium ; parmi les radicaux ayant la formule $-CH_2-O-(CF_2)_q-CF(C_rF_{2r+1})-SO_2X^1$, dans laquelle $X^1$ = F, Cl, Br ou OM, avec $0 \leqq q \leqq 4$ ; parmi les radicaux $-CH_2-C(SO_2-CF_3)_2M$, $-CH_2-O-CO-\Phi-CO-C(SO_2-CF_3)_2M$, $-(CH_2)_s-CO-C(SO_2-CF_3)_2M$, $-(CH_2-O-CO-\Phi-SO_2-C(SO_2-CF_3)_2M$ et $-(CH_2)_s-SO_2-C(SO_2-CF_3)_2M$, avec $1 \leqq s \leqq 16$ ; M représentant un proton ou un cation métallique, de préférence un cation de métal monovalent, ou un cation organique tel qu'un cation ammonium, un cation guanidinium ou un cation amidinium.

8. Copolymère selon la revendication 6, caractérisé en ce que la proportion des unités $-CH_2-CHR^4-O-$ est comprise entre 2 et 30% molaire.

9. Procédé de préparation d'un copolymère selon la revendication 1, par copolymérisation d'oxyde d'éthylène et/ou d'oxyde de propylène, d'au moins un oxiranne répondant à la formule

$$\overline{CH_2 - CHR^1 - O},$$

et éventuellement d'au moins un oxiranne répondant à la formule

$$\overline{CH_2 - CHR^4 - O};$$

$R^1$ représentant un radical $CHR^3=CR^2-X-O-(CH_2)_n-$ dans lequel $R^2$ est $CH_3$ ou H, $R^3$ est H, F, Φ ou Φ-CH=CH, et X représente un groupement électroattracteur, avec $0 \leqq n \leqq 4$ ; $R^4$ étant choisi parmi les radicaux ne comportant pas de fonction réticulable, ledit procédé étant caractérisé en ce que la copolymérisation est effectuée à une température inférieure à 60°C en présence d'un catalyseur de Vandenberg comprenant un amorceur et un coamorceur.

**10.** Procédé selon la revendication 9, caractérisé en ce que le substituant $R^4$ est choisi parmi les radicaux alkyles, de préférence parmi les radicaux alkyles ayant de 1 à 16 atomes de carbone, ou parmi les radicaux alkoxy, de préférence parmi les radicaux $-(CH_2)_n-O-((CH_2)_m-O)_p-CH_3$, avec $0 \leqq n \leqq 4$, $1 \leqq m \leqq 4$ et $0 \leqq p \leqq 20$, ou parmi les radicaux alkyl-(perfluoroalkyl sulfonyl) éthers, de préférence parmi les radicaux alkyl(halogénures de perfluoroalkyl sulfonyl) éthers et alkyl(perfluoralkyl sulfonates) éthers, ou parmi les radicaux incorporant une fonction ionophore dans lesquels la charge négative est portée par le carbanion bis(trifluorométhylsulfonyl)méthylure $-C(SO_2CF_3)_2M$, M représentant un proton ou un cation métallique, de préférence un cation de métal monovalent, ou un cation organique tel qu'un cation ammonium, un cation guanidinium ou un cation amidinium.

**11.** Procédé selon la revendication 9, caractérisé est ce que l'amorceur est un composé organométallique choisi parmi les composés du type trialkyl aluminium ou les composés du type dialkyl zinc ou diaryl zinc.

**12.** Procédé selon la revendication 9, caractérisé en ce que le coamorceur est l'eau, éventuellement en présence d'éther diéthylique comme diluant.

**13.** Procédé selon la revendication 9, caractérisé en ce le milieu réactionnel contient un agent chélatant.

**14.** Procédé selon la revendication 9, caractérisé en ce que la température est maintenue entre 50°C et 60°C.

**15.** Procédé selon la revendication 9, caractérisé en ce que l'oxiranne

$$\overline{CH_2 - CHR^1 - O}$$

est choisi parmi l'acrylate de glycidyle et le méthacrylate de glycidyle.

**16.** Procédé selon la revendication 9, caractérisé en ce que l'oxiranne

$$\overline{CH_2 - CHR^4 - O}$$

est choisi parmi le méthylglycidyl éther et le méthyl oxiranne.

**17.** Procédé selon la revendication 9, caractérisé en ce que les monomères et le solvant utilisés ont une teneur en humidité et en impuretés inférieure ou égale à 100 ppm, et en ce que le réacteur utilisé pour la réaction de polymérisation est exempt de traces d'humidité et d'impuretés.

**18.** Matériau macromoléculaire à conduction ionique, caractérisé en ce qu'il comprend un copolymère dont la chaîne est constituée essentiellement par des unités $-CH_2-CH_2-O-$ et/ou des unités $-CH_2-CH(CH_3)-O-$, des unités $-CH_2-CHR^1-O-$, dans lequel $R^1$ représente un radical $CHR^3=CR^2-X-O-(CH_2)_n-$ dans lequel $R^2$ est $CH_3$ ou H, $R^3$ est H, F, Φ ou Φ-CH=CH, et X représente un groupement électroattracteur, avec $0 \leqq n \leqq 4$, le substituant $R^1$ pouvant varier d'une unité à l'autre, et éventuellement des unités $-CH_2-CHR^4-O-$ dans lesquelles $R^4$ est un radical ne comportant pas de double liaison carbonecarbone, le substituant $R^4$ pouvant varier d'une unité à l'autre.

**19.** Matériau à conduction ionique selon la revendication 18, caractérisé en ce que le copolymère a une masse moléculaire moyenne en nombre supérieure ou égale à 20 000, de préférence supérieure ou égale à 100 000.

**20.** Matériau à conduction ionique selon la revendication 18, caractérisé en ce qu'il contient de 0% à 10% en poids de solvant ou de plastifiant et que la teneur en unités $-CH_2-CHR^1-O-$ est comprise en 0,05 et 1% molaire.

**21.** Matériau à conduction ionique selon la revendication 18, caractérisé en ce qu'il contient de 10% à 80% en poids d'un solvant ou d'un plastifiant, et en que la teneur en unités $-CH_2-CHR^1-O-$ est comprise entre 5 et 10% molaire.

**22.** Matériau à conduction ionique selon la revendication 18, caractérisé en ce qu'il comprend en outre au moins un sel facilement dissociable dans le copolymère.

**23.** Matériau selon la revendication 22, caractérisé en ce que le sel est choisi parmi les sels $(1/aA)^+Y^-$, dans lesquels $A^{a+}$ représente un cation métallique, un cation organique du type ammonium, amidinium ou guanidinium, a est la valence du cation $A^{a+}$, Y représente un anion à charge électronique délocalisée, de préférence $Br^-$, $ClO_4^-$, $AsF_6^-$, $R_FSO_3^-$, $(R_FSO_2)_2N^-$, $(R_FSO_2)_3C^-$, $C_6H_{(6-x)}(CO(CF_3SO_2)_2C^-)_x$ ou $C_6H_{(6-x)}(SO_2(CF_3SO_2)_2C^-)_x$, $R_F$ représentant un groupement perfluoroalkyle ou perfluoroaryle, avec $1 \leqq x \leqq 4$.

**24.** Matériau à conduction ionique selon la revendication 18, caractérisé en ce que le copolymère est réticulé, la réticulation radicalaire ayant été effectuée par voie photochimique ou par voie thermique, éventuellement en présence d'un amorceur chimique.

**25.** Matériau à conduction ionique selon la revendication 18, caractérisé en ce que la teneur en unités $-CH_2-CHR^1-O-$ est de 3 à 5% en poids, en vue du greffage sur la fonction réactive de $R^1$ d'un composé ionique comportant une insaturation.

**26.** Matériau à conduction ionique selon la revendication 18, caractérisé en ce que le copolymère comporte des unités $-CH_2-CHR^4-O-$ dans lesquelles les radicaux $R^4$ portent un groupement ionique et sont choisis parmi les radicaux ayant la formule $-CH_2-O-(CF_2)_q-CF(C_rF_{2r+1})-SO_2OM$ avec $0 \leqq q \leqq 4$ ; parmi les radicaux $-CH_2-C(SO_2-CF_3)_2M$, $-CH_2-O-CO-\Phi-CO-C(SO_2-CF_3)_2M$, $-(CH_2)_s-CO-C(SO_2-CF_3)_2M$, $-CH_2-O-CO-\Phi-SO_2-C(SO_2-CF_3)_2M$ et $-(CH_2)_s-SO_2-C(SO_2-CF_3)_2M$, avec $1 \leqq s \leqq 16$ ; M représentant un proton ou un cation métallique, de préférence un cation de métal monovalent, plus particulièrement un cation de métal alcalin, ou un cation organique tel qu'un cation ammonium, un cation guanidinium ou un cation amidinium, la teneur en unités $-CH_2-CHR^4-O-$ étant de préférence entre 2 et 30% molaire.

**27.** Cellule électrochimique primaire ou secondaire dans laquelle l'électrolyte et/ou au moins une électrode sont constitués par un matériau macromoléculaire à conduction ionique qui comprend un copolymère dont la chaîne est constituée essentiellement par des unités $-CH_2-CH_2-O-$ et/ou des unités $-CH_2-CH(CH_3)-O-$, des unités $-CH_2-CHR^1-O-$ dans lesquelles $R^1$ représente un radical $CHR^3=CR^2-X-O-(CH_2)_n-$ dans lequel $R^2$ est $CH_3$ ou H, $R^3$ est H, F, $\Phi$ ou $\Phi-CH=CH$, et X représente un groupement électroattracteur, avec $0 \leqq n \leqq 4$, et éventuellement des unités $-CH_2-CHR^4-O-$ dans lesquelles les radicaux R4 portent un groupement ionique et sont choisis parmi les radicaux ayant la formule $-CH_2-O-(CF_2)_q-CF(C_rF_{2r+1})-SO_2X^1$, dans laquelle $X^1$ = F, Cl, Br ou OM, avec $0 \leqq q \leqq 4$ ; parmi les radicaux $-CH_2-C(SO_2-CF_3)_2M$, $-CH_2-O-CO-\Phi-CO-C(SO_2-CF_3)_2M$, $-(CH_2)_s-CO-C(SO_2-CF_3)_2M$, $-CH_2-O-CO-\Phi-SO_2-C(SO_2-CF_3)_2M$ et $-(CH_2)_s-SO_2-C(SO_2-CF_3)_2M$, avec $1 \leqq s \leqq 16$ ; M représentant un proton ou un cation métallique, de préférence un cation de métal monovalent, plus particulièrement un cation de métal alcalin, ou un cation organique tel qu'un cation ammonium, un cation guanidinium ou un cation amidinium

**28.** Générateur électrochimique comprenant une électrode négative et une électrode positive séparées par un électrolyte solide polymère, caractérisé en ce que l'électrolyte solide polymère et/ou au moins l'une des électrodes sont constitués essentiellement par un matériau macromoléculaire à conduction ionique qui comprend un copolymère dont la chaîne est constituée essentiellement par des unités $-CH_2-CH_2-O-$ et/ou des unités $-CH_2-CH(CH_3)-O-$, des unités $-CH_2-CHR^1-O-$ dans lesquelles $R^1$ représente un radical $CHR^3=CR^2-X-O-(CH_2)_n-$ dans lequel $R^2$ est $CH_3$ ou H, $R^3$ est H, F, $\Phi$ ou $\Phi-CH=CH$, et X représente un groupement électroattracteur, avec $0 \leqq n \leqq 4$, et éventuellement des unités $-CH_2-CHR^4-O-$ dans lesquelles les radicaux $R^4$ portent un groupement ionique et sont choisis parmi les radicaux ayant la formule $-CH_2-O-(CF_2)_q-CF(C_rF_{2r+1})-SO_2OM$ avec $0 \leqq q \leqq 4$ ; parmi les radicaux $-CH_2-C(SO_2-CF_3)_2M$, $-CH_2-O-CO-\Phi-CO-C(SO_2-CF_3)_2M$, $-(CH_2)_s-CO-C(SO_2-CF_3)_2M$, $-CH_2-O-CO-\Phi-SO_2-C(SO_2-CF_3)_2M$ et $-(CH_2)_s-SO_2-C(SO_2-CF_3)_2M$, avec $1 \leqq s \leqq 16$ ; M représentant un proton ou un cation métallique, de préférence un cation de métal monovalent, plus particulièrement un cation de métal alcalin, ou un cation organique tel qu'un cation ammonium, un cation guanidinium ou un cation amidinium.

**29.** Générateur selon la revendication 28, caractérisé en ce que l'électrolyte est un matériau à conduction ionique plastifié par addition d'un solvant.

**30.** Utilisation pour l'élaboration de systèmes électrochromes, de systèmes de modulation de lumière, de membranes sélectives ou de membranes de référence dans les capteurs à membrane, d'un matériau macromoléculaire à conduction ionique qui comprend un copolymère dont la chaîne est constituée essentiellement par des unités $-CH_2-CH_2-O-$ et/ou des unités $-CH_2-CH(CH_3)-O-$, des unités $-CH_2-CHR^1-O-$ dans lesquelles $R^1$ représente un radical $CHR^3=CR^2-X-O-(CH_2)_n-$ et dans lequel $R^2$ est $CH_3$ ou H, $R^3$ est H, F, Φ ou Φ-CH=CH, et X représente un groupement électroattracteur, avec $0 \leqq n \leqq 4$, et éventuellement des unités $-CH_2-CHR^4-O-$ dans lesquelles les radicaux $R^4$ portent un groupement ionique et sont choisis parmi les radicaux ayant la formule $-CH_2-O-(CF_2)_q-CF(C_rF_{2r+1})-SO_2OM$ avec $0 \leqq q \leqq 4$ ; parmi les radicaux $-CH_2-C(SO_2-CF_3)_2M$, $-CH_2-O-CO-\Phi-CO-C(SO_2-CF_3)_2M$, $-(CH_2)_s-CO-C(SO_2-CF_3)_2M$, $-CH_2-O-CO-\Phi-SO_2-C(SO_2-CF_3)_2M$ et $-(CH_2)_s-SO_2-C(SO_2-CF_3)_2M$, avec $1 \leqq s \leqq 16$ ; M représentant un proton ou un cation métallique, de préférence un cation de métal monovalent, plus particulièrement un cation de métal alcalin, ou un cation organique tel qu'un cation ammonium, un cation guanidinium ou un cation amidinium.

Office européen des brevets

# RAPPORT DE RECHERCHE EUROPEENNE

Numero de la demande
EP 94 40 2757

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP-A-0 434 011 (B.F. GOODRICH)<br>* page 6, ligne 20 - ligne 30 *<br>* exemples 8-10 *<br>--- | 1,3,4, 18,22,23 | C08G65/14<br>C08G65/22<br>H01M6/18<br>H01M10/40<br>C08G65/12 |
| X | NL-A-8 601 042 (NEDERLAND ORGAN. TNO)<br>* page 2, ligne 23 - ligne 34 *<br>* tableau 3 *<br>--- | 1-6 | |
| X | DATABASE WPI<br>Derwent Publications Ltd., London, GB;<br>AN 74-18542V<br>& JP-A-49 006 804 (TORAY INDS INC.) 16 Février 1974<br>* abrégé *<br>--- | 1,3,4 | |
| A,D | WO-A-93 16988 (CENTRE NATIONAL DE LA RECHERCHE SCIENTIFIC)<br>* exemple 7 *<br>--- | 1-30 | |
| A | EP-A-0 460 876 (DAI-ICHI KOGYO SEIYAKU)<br>* revendications 1,6 *<br>----- | 1,7,18 | **DOMAINES TECHNIQUES RECHERCHES (Int.Cl.6)**<br>C08G<br>H01M |

Le présent rapport a été établi pour toutes les revendications

| Lieu de la recherche | Date d'achèvement de la recherche | Examinateur |
|---|---|---|
| LA HAYE | 24 Février 1995 | O'Sullivan, T |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)